# EUROPÄISCHE PATENTSCHRIFT

(11) **EP 3 810 489 B1**
(45) Veröffentlichungstag und Bekanntmachung des Hinweises auf die Patenterteilung: **14.06.2023**
(21) Anmeldenummer: 20757259.5
(22) Anmeldetag: 12.08.2020
(51) Int. Cl.: B62D 21/03, B62D 24/04

(54) **FAHRGESTELL UND NUTZFAHRZEUG**
CHASSIS AND UTILITY VEHICLE
CHÂSSIS ET VÉHICULE UTILITAIRE

(30) Priorität: 11.09.2019 DE 102019124460
(43) Veröffentlichungstag der Anmeldung: 28.04.2021
(73) Patentinhaber: Rheinmetall MAN Military Vehicles Österreich GesmbH, 1230 Wien (AT)
(72) Erfinder: SCHLEGEL, Christoph, 3730 Eggenburg (AT)
(74) Vertreter: Horn Kleimann Waitzhofer Patentanwälte PartG mbB
(86) Internationale Anmeldenummer: PCT/EP2020/072570
(87) Internationale Veröffentlichungsnummer: WO 2021/047847

(56) Entgegenhaltungen:
- EP-A1- 3 181 396
- DE-A1- 2 129 050
- DE-A1-102018 123 033
- FR-A- 1 038 576
- GB-A- 561 581

## Beschreibung

Die vorliegende Erfindung betrifft ein Fahrgestell für ein Nutzfahrzeug, insbesondere für ein militärisches Nutzfahrzeug, und ein Nutzfahrzeug, insbesondere ein militärisches Nutzfahrzeug, mit einem derartigen Fahrgestell.

Geländegängige Nutzfahrzeuge, beispielsweise Lastkraftwagen, können ein biegesteifes, jedoch verwindungsweiches Fahrgestell und einen auf dem Fahrgestell angeordneten verwindungssteifen austauschbaren Aufbau, wie beispielsweise einen Container, aufweisen. Bei einer Geländefahrt kann sich das Fahrgestell verwinden, wobei der verwindungssteife Aufbau entweder das Verwinden beeinträchtigt, wodurch hohe Spannungen in den Fahrgestellrahmen eingebracht werden können, oder wobei der Aufbau selbst übermäßig belastet wird.

Die DE 27 26 448 A1 zeigt eine Lagerung eines in sich steifen Aufbaus auf einem Fahrgestellrahmen eines Nutzfahrzeugs. Dabei ist der Aufbau an zwei Stellen nach ihrem vorderen und hinteren Ende über elastisch nachgiebige Lager im Bereich der Mittellängsachse des Fahrzeuges gelagert und über zwei weitere, sich in einer Fahrzeugquerebene gegenüberliegende, zwischen den ersten Lagerstellen angeordnete Lager mit den Längsträgern des Fahrgestellrahmens oder eines auf diesen aufgesetzten Hilfsrahmens verbunden.

Die DE 29 11 722 A1 beschreibt eine Vorrichtung zum elastischen Abstützen eines verwindungssteifen Aufbaus auf einem verwindungsweichen Fahrgestellrahmen von Kraftfahrzeugen. Die Vorrichtung umfasst zwei quer und symmetrisch zur Fahrzeugmittellängsachse angeordnete nachgiebige Lagerstellenpaare und eine an einem Ende des Aufbaus in der Längsmittelachse befindliche allseits nachgiebige Lagerstelle, wobei ein Lagerstellenpaar vom vorderen Ende des Aufbaus mit in Druckrichtung harter und in Zugrichtung weicher Federung und großen Ausgleichswegen, das andere Lagerstellenpaar im Bereich der Hinterachse und die einzelne Lagerstelle am hinteren Ende des Rahmens angeordnet ist, wobei die Längs- und Querkräfte nur von den vorderen und hinteren Lagerstellen und die Vertikalkräfte von allen Lagerstellen übertragbar sind.

Die EP 0 214 990 B1 beschreibt ein mehrachsiges Kraftfahrzeug mit einem verwindungsweichen Rahmen und einem auf diesem Rahmen mittels Abstützorganen abgestützten, wenig verwindungsfähigen Aufbau, wobei in Richtung der Längserstreckung des Fahrzeugs im mittleren Bereich des Aufbaus zwischen diesem und dem Rahmen eine Vertikalkräfte und Längskräfte nachgiebig aufnehmende, Relativbewegungen zwischen Rahmen und Aufbau beschränkt zulassende Verbindung vorgesehen ist. Dabei ist mindestens ein Abstützorgan in mindestens einem weiteren, in Richtung der Fahrzeuglängserstreckung versetzten Bereich angeordnet, wobei in mindestens einem Bereich des Aufbaus zwischen diesem und dem Rahmen eine Querkräfte aufnehmende Seitenschubstützverbindung vorgesehen ist.

Die DE 101 06 495 A1 zeigt ein Lastfahrzeug mit einem biegesteifen, aber verwindungsweichen Fahrgestellrahmen, auf dem ein verwindbarer Hilfsrahmen angeordnet ist, der einen biege- und verwindungssteifen Aufbau trägt, der an wenigstens drei Punkten über Bewegungslager mit dem Hilfsrahmen verbunden ist. Wenigstens eines dieser Bewegungslager ist als Schwenklager ausgebildet, dessen Schwenkachse etwa in der Fahrzeuglängsmittelachse verläuft. Wenigstens zwei der Bewegungslager sind als Auflage ausgebildet, die seitlich beidseits der Schwenkachse angeordnet und in Fahrzeuglenkrichtung von dem Schwenklager beabstandet sind.

Die DE 21 29 050 A1 beschreibt eine Vorrichtung zur Aufhängung der Fahrerkabine von Fahrzeugen, wobei das Fahrgestell des Fahrzeugs vorne mit Gliedern zur Befestigung des vorderen Teils der Kabine und in der Nähe des hinteren Abschnitts der Kabine mit einer Traverse versehen ist, welche Laschen mit Gelenkachsen für Lenker trägt, welche die Traverse mit der Fahrerkabine verbinden, welche ebenfalls mit Gelenkachsen für diese Lenker versehen ist, wobei die Ausbildung so getroffen ist, dass durch die Gelenkachsen gehende fiktive Geraden sich in einem auf der Längsachse des Fahrgestells liegenden Punkt schneiden.

Die GB 561 581 A zeigt ein Tankfahrzeug, bei dem ein Tank über Schwingenelemente an ein Fahrgestell des Tankfahrzeugs beweglich angebunden ist.

Vor diesem Hintergrund besteht eine Aufgabe der vorliegenden Erfindung darin, ein verbessertes Fahrgestell für ein Nutzfahrzeug zur Verfügung zu stellen.

Demgemäß wird ein Fahrgestell für ein Nutzfahrzeug, insbesondere für ein militärisches Nutzfahrzeug, vorgeschlagen. Das Fahrgestell umfasst einen Fahrgestellrahmen, der sich entlang einer Längsrichtung des Fahrgestells erstreckt, einen fest mit dem Fahrgestellrahmen verbundenen Querträger zum Tragen eines auf dem Fahrgestell platzierbaren austauschbaren Aufbaus, einen verschwenkbar an dem Fahrgestellrahmen gelagerten Pendelquerträger zum Tragen des Aufbaus, ein erstes Schwingenelement, welches um eine erste Drehachse drehbar an dem Fahrgestellrahmen gelagert ist und welches um eine zweite Drehachse drehbar an dem Pendelquerträger gelagert ist, und ein zweites Schwingenelement, welches um eine erste Drehachse drehbar an dem Fahrgestellrahmen gelagert ist und welches um eine zweite Drehachse drehbar an dem Pendelquerträger gelagert ist. Dabei schneiden eine Verlängerung des ersten Schwingenelements und eine Verlängerung des zweiten Schwingenelements einander in einem Momentanpol, welcher in einer Hochrichtung des Fahrgestells betrachtet unterhalb des Pendelquerträgers positioniert ist, wobei die beiden zweiten Drehachsen der Schwingenelemente in der Hochrichtung betrachtet zwischen den beiden ersten Drehachsen der Schwingenelemente und dem Momentanpol positioniert sind.

Dadurch, dass der Pendelquerträger nicht direkt drehbar an dem Fahrgestellrahmen gelagert ist, sondern über das erste Schwingenelement und das zweite Schwingenelement mit dem Fahrgestellrahmen verbunden ist, kann ein Momentanpol, um den sich der Pendelquerträger dreht, unterhalb des Fahrgestellrahmens positioniert werden. Hierdurch ist es möglich, dass sich der Fahrgestellrahmen verwindet, ohne dass der auf dem Querträger und dem Pendelquerträger platzierte Aufbau zu stark mechanisch belastet wird. Ferner wird hierdurch auch verhindert, dass aufgrund der Verwindungssteifheit des Aufbaus zu große Spannungen in den Fahrgestellrahmen eingebracht werden.

Das Fahrgestell kann Teil des Nutzfahrzeugs sein. Das Fahrgestell ist jedoch auch für einen Anhänger, insbesondere für einen Anhänger des Nutzfahrzeugs, geeignet. Das heißt, das Fahrgestell kann Teil eines Anhängers, insbesondere eines Nutzfahrzeug-Anhängers oder Lastkraftwagen-Anhängers, sein. Das Nutzfahrzeug und der Anhänger können ein Gespann, insbesondere ein Nutzfahrzeug-Gespann oder ein Lastkraftwagen-Gespann, bilden, wobei sowohl das Nutzfahrzeug als auch der Anhänger ein derartiges Fahrgestell aufweisen können. Das Nutzfahrzeug kann jedoch auch mit einem Anhänger ohne ein derartiges Fahrgestell zu einem Gespann kombiniert werden.

Dem Fahrgestell sind neben der Längsrichtung, in der sich der Fahrgestellrahmen erstreckt, bevorzugt eine Querrichtung, in der sich der Querträger und der Pendelquerträger erstrecken, sowie eine Hochrichtung zugeordnet. Die Längsrichtung, die Querrichtung und die Hochrichtung sind senkrecht zueinander positioniert und bilden bevorzugt ein Koordinatensystem des Fahrgestells. Das Fahrgestell umfasst bevorzugt mehrere Achsen, insbesondere Antriebsachsen, an denen Räder montiert sind. Die Hochrichtung ist insbesondere von den Achsen in Richtung des Fahrgestellrahmens, insbesondere in Richtung des Pendelquerträgers, orientiert.

Der Fahrgestellrahmen umfasst vorzugsweise zumindest zwei sich entlang der Längsrichtung erstreckende Längsträger, die mit Hilfe einer Vielzahl in der Querrichtung verlaufender Quertraversen oder Traversen fest miteinander verbunden sein können. Der Fahrgestellrahmen ist vorzugsweise verwindungsweich und biegesteif. Die Längsträger können optional jeweils mehrere in der Längsrichtung verlaufende Profilträger, beispielsweise Hohlkastenprofilträger, U-Profilträger oder I-Profilträger, aufweisen. Die Bauteile des Fahrgestellrahmens sind fest miteinander verbunden und können beispielsweise miteinander verschraubt, vernietet oder verschweißt sein.

Darunter, dass der Querträger "fest" mit dem Fahrgestellrahmen verbunden ist, ist insbesondere zu verstehen, dass der Querträger unbeweglich gegenüber dem Fahrgestellrahmen ist und insbesondere gegenüber diesem nicht verdrehbar oder verschiebbar ist. Beispielsweise ist der Querträger mit dem Fahrgestellrahmen verschraubt, vernietet oder verschweißt. Der Querträger ragt in der Querrichtung vorzugsweise beidseits seitlich über den Fahrgestellrahmen hinaus.

Darunter, dass der Pendelquerträger "verschwenkbar" an dem Fahrgestellrahmen gelagert ist, kann insbesondere zu verstehen sein, dass der Pendelquerträger eine Schwenkbewegung gegenüber dem Fahrgestellrahmen vollführen kann. Die Schwenkbewegung kann beispielsweise eine Kombination aus einer Drehbewegung und einer linearen Bewegung, insbesondere entlang der Hochrichtung und der Querrichtung, sein. Die Schwenkbewegung kann auch eine reine Drehbewegung oder rotatorische Bewegung sein.

Bevorzugt ist der Pendelquerträger nicht unmittelbar an dem Fahrgestellrahmen gelagert, sondern mittelbar mit Hilfe der Schwingenelemente. Die Schwingenelemente sind somit zwischen dem Fahrgestellrahmen und dem Pendelquerträger angeordnet und verbinden den Pendelquerträger somit verschwenkbar mit dem Fahrgestellrahmen. Der Pendelquerträger ragt in der Querrichtung vorzugsweise beidseits seitlich über den Fahrgestellrahmen hinaus. Der Pendelquerträger ist bevorzugt aus einer Neutral- oder Ausgangsposition stufenlos in eine Vielzahl an Auslenkpositionen auslenkbar oder verschwenkbar.

Der austauschbare Aufbau kann beispielsweise eine Pritsche, ein Container, ein Koffer, ein Tank oder dergleichen sein oder einen derartigen umfassen. Der Aufbau kann beispielsweise quaderförmig sein. Der Aufbau ist auf dem Querträger und dem Pendelquerträger gelagert. Der Querträger und der Pendelquerträger bilden bevorzugt eine Aufbauschnittstelle beziehungsweise eine Aufbautrageeinrichtung des Fahrgestells. Darunter, dass der Aufbau "austauschbar" ist, ist insbesondere zu verstehen, dass unterschiedliche Arten von Aufbauten gegeneinander ausgetauscht werden können. Dies schließt jedoch nicht aus, dass der Aufbau fest mit dem Fahrgestell verbunden, beispielsweise mit diesem verschraubt, ist. Die Verbindung zwischen dem Aufbau und dem Fahrgestell ist jedoch lösbar, um den Aufbau austauschen zu können.

Das erste Schwingenelement und das zweite Schwingenelement sind vorzugsweise identisch aufgebaut. Die Schwingenelemente können eine knochenförmige Geometrie mit einem stabförmigen Basisabschnitt aufweisen, an den sich endseitig beidseits ringförmige Aufnahmeabschnitte anschließen. Jeder Aufnahmeabschnitt umfasst bevorzugt einen Durchbruch. Der Durchbruch ist vorzugsweise jeweils eine mittig in dem jeweiligen Aufnahmeabschnitt vorgesehene Bohrung. In den Durchbrüchen können Achsenelemente aufgenommen sein, die eine Verschwenkung der Schwingenelemente um die jeweilige erste Drehachse und die zweite Drehachse ermöglichen. Die Achsenelemente können an dem Fahrgestellrahmen und an dem Pendelquerträger vorgesehen sein.

Vorzugsweise bilden der Fahrgestellrahmen, das erste Schwingenelement, das zweite Schwingenelement und der Pendelquerträger ein Koppelgetriebe des Fahrgestells. Ein derartiges Koppelgetriebe umfasst ein Gestell, eine Koppel und die Koppel mit dem Gestell verbindende Schwingen. Vorliegend ist der Fahrgestellrahmen das Gestell des Koppelgetriebes, der Pendelquerträger ist die Koppel des Koppelgetriebes, und die Schwingenelemente sind die Schwingen des Koppelgetriebes. Insbesondere stimmt die erste Drehachse des ersten Schwingenelement nicht mit der ersten Drehachse des zweiten Schwingenelements überein. Es handelt sich hierbei um zwei verschiedene erste Drehachsen. Demgemäß stimmt die zweite Drehachse des ersten Schwingenelement bevorzugt nicht mit der zweiten Drehachse des zweiten Schwingenelements überein. Es handelt sich hierbei um zwei verschiedene zweite Drehachsen.

Gemäß einer Ausführungsform sind die beiden ersten Drehachsen der Schwingenelemente in einer Querrichtung des Fahrgestells betrachtet weiter voneinander beabstandet angeordnet als die beiden zweiten Drehachsen der Schwingenelemente, so dass das erste Schwingenelement und das zweite Schwingenelement schräg zueinander positioniert sind.

In der Querrichtung betrachtet sind somit die beiden zweiten Drehachsen bevorzugt zwischen den beiden ersten Drehachsen angeordnet.

Gemäß einer weiteren Ausführungsform sind das erste Schwingenelement und das zweite Schwingenelement derart schräg zueinander positioniert, dass das erste Schwingenelement und das zweite Schwingenelement aufeinander zu laufen.

Insbesondere verlaufen das erste Schwingenelement und das zweite Schwingenelement entgegen der Hochrichtung betrachtet aufeinander zu, so dass das erste Schwingenelement und das zweite Schwingenelement V-förmig angeordnet sind. Umgekehrt laufen das erste Schwingenelement und das zweite Schwingenelement entlang der Hochrichtung betrachtet voneinander weg.

Eine Verlängerung des ersten Schwingenelements und eine Verlängerung des zweiten Schwingenelements schneiden einander in einem Momentanpol, welcher in einer Hochrichtung des Fahrgestells betrachtet unterhalb des Pendelquerträgers positioniert ist.

Wie zuvor erwähnt, ist die Hochrichtung von den Achsen des Fahrgestells in Richtung des Fahrgestellrahmens orientiert. Der Momentanpol ist in der Hochrichtung betrachtet insbesondere unterhalb des Fahrgestellrahmens positioniert. Unter einer "Verlängerung" ist vorliegend jeweils eine durch die erste Drehachse und die zweite Drehachse des ersten Schwingenelements beziehungsweise durch die erste Drehachse und die zweite Drehachse des zweiten Schwingenelements verlaufende Gerade zu verstehen. Der Begriff "Verlängerung" kann daher durch den Begriff "Gerade" ersetzt werden. Diese Geraden treffen oder schneiden sich in dem Momentanpol. Unter einem "Momentanpol" oder "Bewegungspol" ist bei einer ebenen Bewegung eines starren Körpers, beispielsweise des Pendelquerträgers, derjenige Raumpunkt, von dem der Körper als nur drehend angesehen und behandelt werden kann, zu verstehen. Der Pendelquerträger bewegt sich bei einer Auslenkung desselben bevorzugt in einer von der Hochrichtung und der Querrichtung aufgespannten Ebene. Je nachdem, ob der Pendelquerträger ausgelenkt ist oder nicht, kann der Pendelquerträger beziehungsweise der Momentanpol von der zuvor erwähnten Ausgangsposition in eine beliebige Anzahl an Auslenkpositionen verschwenkt oder verschoben werden. Der Momentanpol bewegt sich dabei entlang der Hochrichtung und der Querrichtung. Entlang der Längsrichtung bewegt sich der Momentanpol insbesondere nicht. Der Momentanpol ist jedoch in der Hochrichtung betrachtet stets unterhalb des Pendelquerträgers, insbesondere unterhalb des Fahrgestellrahmens, angeordnet. Bei einem Auslenken oder Verschwenken des Pendelquerträgers von der Ausgangsposition in die Auslenkposition beziehungsweise in verschiedene Auslenkpositionen bewegt sich der Momentanpol bevorzugt auf einer Bahnkurve. Die Bahnkurve liegt insbesondere in einer von der Hochrichtung und der Querrichtung aufgespannten Ebene.

Die Bahnkurve kann kreisförmig, elliptisch oder oval sein. Darunter ist zu verstehen, dass die Bahnkurve Teil eines Kreises, einer Ellipse oder eines Ovals sein kann.

Die beiden zweiten Drehachsen der Schwingenelemente sind in der Hochrichtung betrachtet zwischen den beiden ersten Drehachsen der Schwingenelemente und dem Momentanpol positioniert.

In der Querrichtung betrachtet liegt der Momentanpol insbesondere in der Ausgangsposition mittig zwischen den beiden zweiten Drehachsen und zwischen den beiden ersten Drehachsen. Dabei sind die beiden zweiten Drehachsen zwischen den beiden ersten Drehachsen angeordnet. In der Auslenkposition oder in den Auslenkpositionen ist der Momentanpol in der Querrichtung betrachtet bevorzugt außermittig platziert.

Gemäß einer weiteren Ausführungsform sind die beiden ersten Drehachsen der Schwingenelemente in der Hochrichtung betrachtet auf derselben Höhe positioniert, wobei die beiden zweiten Drehachsen der Schwingenelemente in einer Ausgangsposition des Pendelquerträgers in der Hochrichtung betrachtet auf derselben Höhe positioniert sind.

Insbesondere sind die beiden ersten Drehachsen festgelegt und verändern ihre Position in der Hochrichtung und in der Querrichtung bei einer Auslenkung des Pendelquerträgers nicht. Da die zweiten Drehachsen an dem Pendelquerträger vorgesehen sind, verändern diese ihre Position sowohl in der Hochrichtung als auch in der Querrichtung bei einer Auslenkung des Pendelquerträgers aus der Ausgangsposition in eine beliebige Auslenkposition.

Gemäß einer weiteren Ausführungsform sind jeweils zwei erste Schwingenelemente und zwei zweite Schwingenelemente vorgesehen, wobei der Pendelquerträger in der Längsrichtung betrachtet jeweils zwischen den beiden ersten Schwingenelementen und zwischen den beiden zweiten Schwingenelementen angeordnet ist.

Das heißt, es können vier Schwingenelemente vorgesehen sein, wobei der Pendelquerträger zwischen den beiden ersten Schwingenelementen und zwischen den beiden zweiten Schwingenelementen positioniert ist. Hierdurch kann ein Verkippen des Pendelquerträgers um die Querrichtung verhindert werden. Dadurch wird die Gefahr eines Verkantens des Pendelquerträgers und/oder der Schwingenelemente reduziert. Dies ist jedoch optional. Es können auch genau ein erstes Schwingenelement und genau ein zweites Schwingenelement vorgesehen sein. Das heißt, es sind besonders bevorzugt genau zwei oder zumindest zwei Schwingenelemente vorgesehen. Für den Fall, dass nur ein erstes Schwingenelement und nur ein zweites Schwingenelement vorgesehen sind, ist der Pendelquerträger in der Längsrichtung betrachtet bevorzugt zwischen den Schwingenelementen und dem Fahrgestellrahmen angeordnet. Das heißt, die Schwingenelemente sind in diesem Fall bevorzugt außenseitig an dem Pendelquerträger vorgesehen. Alternativ können die Schwingenelemente für den Fall, dass nur ein erstes Schwingenelement und nur ein zweites Schwingenelement vorgesehen sind, jedoch auch innenseitig an dem Pendelquerträger vorgesehen sein. In diesem Fall sind die Schwingenelemente in der Längsrichtung betrachtet zwischen dem Pendelquerträger und dem Fahrgestellrahmen angeordnet.

Gemäß einer weiteren Ausführungsform ist das erste Schwingenelement um seine erste Drehachse drehbar an einem an dem Fahrgestellrahmen angebrachten ersten Achsenelement gelagert, wobei das zweite Schwingenelement um seine erste Drehachse drehbar an einem an dem Fahrgestellrahmen angebrachten zweiten Achsenelement gelagert ist.

Vorzugsweise umfasst der Fahrgestellrahmen einen zwischen den beiden Längsträgern angeordneten Verbindungsträger, der die beiden Längsträger fest miteinander verbindet. An dem Verbindungsträger können das erste Achsenelement und das zweite Achsenelement angebracht sein. Beispielsweise sind das erste Achsenelement und das zweite Achsenelement mit dem Verbindungsträger verschweißt, vernietet oder verschraubt. Die Achsenelemente sind in den jeweiligen Durchbrüchen der Aufnahmeabschnitte der Schwingenelemente aufgenommen. Hierzu können beispielsweise in den Aufnahmeabschnitten entsprechende Lager, beispielsweise Gleitlager oder Wälzlager, vorgesehen sein. Alternativ können die Achsenelemente auch drehfest mit den Schwingenelementen verbunden sein, wobei die Achsenelemente dann drehbar an dem Fahrgestellrahmen, insbesondere an dem Verbindungsträger, gelagert sind. Auch in diesem Fall können entsprechende Lager, wie beispielsweise Gleitlager oder Wälzlager, vorgesehen sein. Auch an dem Pendelquerträger können Achsenelemente vorgesehen sein, die ein Verschwenken der Schwingenelemente um ihre zweiten Drehachsen ermöglichen. Somit kann auch der Pendelquerträger ein erstes Achsenelement und ein zweites Achsenelement umfassen. Diese Achsenelemente können in den Aufnahmeabschnitten der Schwingenelemente aufgenommen sein, in denen die Achsenelemente des Fahrgestellrahmens nicht aufgenommen sind.

Gemäß einer weiteren Ausführungsform sind das erste Achsenelement und das zweite Achsenelement in der Längsrichtung betrachtet an dem Pendelquerträger vorbei oder durch diesen hindurchgeführt.

Hierdurch kann in der Hochrichtung betrachtet ein besonders kompakter Aufbau erreicht werden.

Gemäß einer weiteren Ausführungsform umfasst der Pendelquerträger einen ersten Seitenabschnitt, einen zweiten Seitenabschnitt und einen zwischen dem ersten Seitenabschnitt und dem zweiten Seitenabschnitt angeordneten Basisabschnitt, wobei sich der erste Seitenabschnitt und der zweite Seitenabschnitt über eine Oberseite des Basisabschnitts herauserstrecken, und wobei das erste Achsenelement und das zweite Achsenelement zwischen dem ersten Seitenabschnitt und dem zweiten Seitenabschnitt an dem Pendelquerträger vorbeigeführt sind.

Der Pendelquerträger weist so insbesondere eine V-förmige Geometrie auf, durch die die Achsenelemente hindurchgeführt sind. In der Hochrichtung betrachtet ragen die Seitenabschnitte dann insbesondere über die Achsenelemente hinaus. Vorzugsweise ist der Basisabschnitt kastenförmig oder quaderförmig ausgebildet. Der Pendelquerträger ist vorzugsweise hohl. Der Pendelquerträger kann ein Hohlkastenprofil sein oder aus Hohlkastenprofilen aufgebaut sein. Der Pendelquerträger kann auch aus mehreren I-förmigen oder U-förmigen Profilträgern zusammengesetzt sein.

Gemäß einer weiteren Ausführungsform umfasst der Pendelquerträger einen ersten Durchbruch, durch welchen das erste Achsenelement hindurchgeführt ist, und einen zweiten Durchbruch, durch welchen das zweite Achsenelement hindurchgeführt ist.

Die Durchbrüche können beispielsweise oval oder rechteckförmig mit abgerundeten Ecken sein. Die Durchbrüche erstrecken sich entlang der Querrichtung und der Hochrichtung, wobei die Dimension der Durchbrüche entlang der Querrichtung größer ist als entlang der Hochrichtung. Durch das Vorsehen der Durchbrüche ist es nicht erforderlich, die Achsenelemente an dem Pendelquerträger vorbeizuführen, da sie durch diesen hindurchgeführt werden können. Hierdurch kann der Pendelquerträger einen durchgehenden Obergurt beziehungsweise eine durchgehende ebene Oberseite aufweisen. Unterseitig an dem Pendelquerträger kann in diesem Fall eine Ausnehmung oder Freistellung zum Durchführen einer Anhängerkupplung vorgesehen sein.

Gemäß einer weiteren Ausführungsform ist der Querträger frontseitig an dem Fahrgestellrahmen angeordnet, wobei der Pendelquerträger heckseitig an dem Fahrgestellrahmen angeordnet ist.

"Frontseitig" bedeutet hierbei einem Fahrerhaus des Nutzfahrzeugs zugeordnet. "Heckseitig" bedeutet dabei dem Fahrerhaus abgewandt.

Gemäß einer weiteren Ausführungsform umfasst das Fahrgestell ferner eine Feder- und/oder Dämpfungseinrichtung, welche zwischen dem Fahrgestellrahmen und dem Pendelquerträger angeordnet ist.

Die Feder- und/oder Dämpfungseinrichtung kann eine reine Federeinrichtung oder eine reine Dämpfungseinrichtung, jedoch auch eine kombinierte Feder- und Dämpfungseinrichtung sein. Die Feder- und/oder Dämpfungseinrichtung kann ein Federelement, beispielsweise eine Zylinderfeder oder ein pneumatisches Federelement, und einen Dämpfungszylinder umfassen. Vorzugsweise ist die Feder- und/oder Dämpfungseinrichtung zwischen einem der Längsträger des Fahrgestellrahmens und dem Pendelquerträger angeordnet und verbindet diese miteinander. Es können mehrere Feder- und/oder Dämpfungseinrichtungen vorgesehen sein. Beispielsweise können zwei Feder- und/oder Dämpfungseinrichtungen vorgesehen sein, die beidseitig an dem Fahrgestellrahmen vorgesehen sind.

Ferner wird ein Nutzfahrzeug, insbesondere ein militärisches Nutzfahrzeug, mit einem derartigen Fahrgestell vorgeschlagen.

Das Nutzfahrzeug ist bevorzugt ein Landfahrzeug, insbesondere ein Lastkraftwagen. Das Nutzfahrzeug ist insbesondere ein militärisches Nutzfahrzeug. Das Nutzfahrzeug kann daher auch als Militärnutzfahrzeug bezeichnet werden. Insbesondere ist das Nutzfahrzeug ein geländegängiger Lastkraftwagen. Das Nutzfahrzeug kann ein geschütztes Fahrzeug sein. An dem Fahrgestellrahmen ist bevorzugt eine Vielzahl an Achsen vorgesehen. Das heißt, das Nutzfahrzeug ist ein Mehrachser, insbesondere ein Dreiachser. Das Nutzfahrzeug umfasst bevorzugt einen Allradantrieb. Das Nutzfahrzeug kann daher auch als Allrad-Nutzfahrzeug bezeichnet werden. Das Nutzfahrzeug kann ein Radfahrzeug sein. Alternativ kann das Nutzfahrzeug auch ein Kettenfahrzeug sein.

Wie zuvor erwähnt, kann das Fahrgestell auch Teil eines Anhängers sein. Für diesen Fall wird ein Anhänger, insbesondere ein Anhänger für ein militärisches Nutzfahrzeug, mit einem derartigen Fahrgestell vorgeschlagen.

Gemäß einer Ausführungsform umfasst das Nutzfahrzeug ferner einen austauschbaren Aufbau, welcher auf dem Querträger und auf dem Pendelquerträger platziert ist.

Wie zuvor erwähnt, ist der Aufbau bevorzugt verwindungssteif. Der Aufbau ist vorzugsweise quaderförmig. Der Aufbau kann beispielsweise eine Pritsche, ein Container, ein Koffer, ein Tank oder dergleichen sein. Es können unterschiedliche Aufbauten vorgesehen sein, die ausgetauscht werden können. Der Aufbau kann fest mit dem Fahrgestell verbunden, beispielsweise mit diesem verschraubt, sein. Die Verbindung zwischen dem Aufbau und dem Fahrgestell ist jedoch lösbar, um den Aufbau austauschen zu können.

Die für das Fahrgestell beschriebenen Ausführungsformen und Merkmale gelten für das vorgeschlagene Nutzfahrzeug und für den vorgeschlagenen Anhänger entsprechend und umgekehrt.

"Ein" ist vorliegend nicht zwingend als beschränkend auf genau ein Element zu verstehen, vielmehr können auch mehrere Elemente, wie beispielsweise zwei, drei oder mehr vorgesehen sein. Auch jedes andere hier verwendete Zählwort ist nicht dahingehend zu verstehen, dass eine Beschränkung auf genau die genannte Anzahl an Elementen gegeben ist. Vielmehr sind zahlenmäßige Abweichungen nach oben und nach unten möglich, soweit nichts Gegenteiliges angegeben ist.

Weitere mögliche Implementierungen des Fahrgestells und/oder des Nutzfahrzeugs umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Fahrgestells und/oder des Nutzfahrzeugs hinzufügen.

Weitere vorteilhafte Ausgestaltungen und Aspekte des Fahrgestells und/oder des Nutzfahrzeugs sind Gegenstand der Unteransprüche sowie der im Folgenden beschriebenen Ausführungsbeispiele des Fahrgestells und/oder des Nutzfahrzeugs. Im Weiteren werden das Fahrgestell und/oder das Nutzfahrzeug anhand von bevorzugten Ausführungsformen unter Bezugnahme auf die beigelegten Figuren näher erläutert.
- Fig. 1: zeigt eine schematische Seitenansicht einer Ausführungsform eines Nutzfahrzeugs;
- Fig. 2: zeigt eine schematische Aufsicht einer Ausführungsform eines Fahrgestells für das Nutzfahrzeug gemäß Fig. 1;
- Fig. 3: zeigt eine schematische Rückansicht des Nutzfahrzeugs gemäß Fig. 1;
- Fig. 4: zeigt eine schematische Ansicht einer Ausführungsform eines Schwingenelements für das Fahrgestell gemäß Fig. 2;
- Fig. 5: zeigt eine schematische Schnittansicht des Schwingenelements gemäß der Schnittlinie V-V der Fig. 4;
- Fig. 6: zeigt die Detailansicht VI gemäß der Fig. 3;
- Fig. 7: zeigt eine vergrößerte schematische Aufsicht des Fahrgestells gemäß Fig. 2;
- Fig. 8: zeigt eine schematische perspektivische Teilansicht des Fahrgestells gemäß Fig. 2;
- Fig. 9: zeigt eine schematische Rückansicht einer weiteren Ausführungsform eines Nutzfahrzeugs;
- Fig. 10: zeigt eine schematische perspektivische Ansicht des Nutzfahrzeugs gemäß Fig. 9;
- Fig. 11: zeigt eine schematische perspektivische Ansicht einer Ausführungs- form eines Fahrgestells für das Nutzfahrzeug gemäß Fig. 9;
- Fig. 12: zeigt eine schematische Ansicht einer Ausführungsform eines Pendelquerträgers für das Fahrgestell gemäß Fig. 11; und
- Fig. 13: zeigt eine schematische perspektivische Teilansicht einer weiteren Ausführungsform eines Fahrgestells für das Nutzfahrzeug gemäß Fig. 9.

In den Figuren sind gleiche oder funktionsgleiche Elemente mit denselben Bezugszeichen versehen worden, sofern nichts anderes angegeben ist. Verdeckte Bauteile sind in den Figuren mit gestrichelten Linien dargestellt.

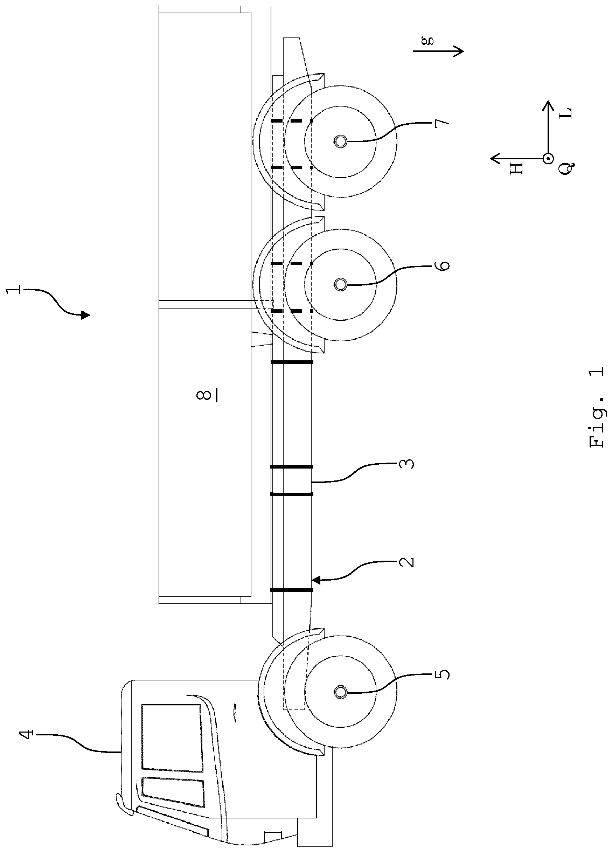

Die Fig. 1 zeigt eine schematische Seitenansicht einer Ausführungsform eines Nutzfahrzeugs 1. Das Nutzfahrzeug 1 ist ein Landfahrzeug. Das Nutzfahrzeug 1 ist insbesondere ein militärisches Nutzfahrzeug. Das Nutzfahrzeug 1 kann daher auch als Militärnutzfahrzeug bezeichnet werden. Das Nutzfahrzeug 1 kann, wie in der Fig. 1 gezeigt, ein Lastkraftwagen sein. Insbesondere ist das Nutzfahrzeug 1 ein geländegängiger Lastkraftwagen. Das Nutzfahrzeug 1 kann ein geschütztes Fahrzeug sein.

Dem Nutzfahrzeug 1 beziehungsweise einem Fahrgestell 2 des Nutzfahrzeugs 1 ist ein Koordinatensystem mit einer x-Richtung oder Längsrichtung L, einer y-Richtung oder Hochrichtung H und einer z-Richtung oder Querrichtung Q zugeordnet. Die Richtungen H, L, Q sind senkrecht zueinander orientiert. Die Hochrichtung H ist parallel zu einer Schwerkraftrichtung g orientiert. Die Schwerkraftrichtung g ist in der Orientierung der Fig. 1 von oben nach unten orientiert.

Das Nutzfahrzeug 1 umfasst das Fahrgestell 2 mit einem sich in der Längsrichtung L erstreckenden Fahrgestellrahmen 3. Der Fahrgestellrahmen 3 ist biegesteif und verwindungsweich und erstreckt sich von einem Fahrerhaus 4 bis hin zu einem Fahrzeugheck. "Verwindungsweich" bedeutet dabei insbesondere, dass sich der Fahrgestellrahmen 3 um die Längsrichtung L tordieren kann.

An dem Fahrgestellrahmen 3 ist eine Vielzahl an Achsen 5 bis 7 vorgesehen. Das heißt, das Nutzfahrzeug 1 ist ein Dreiachser. Die Anzahl der Achsen 5 bis 7 ist jedoch beliebig. Das Nutzfahrzeug 1 umfasst bevorzugt einen Allradantrieb. Das heißt, alle Achsen 5 bis 7 sind angetrieben. Das Nutzfahrzeug 1 kann daher auch als Allrad-Nutzfahrzeug bezeichnet werden. Das Nutzfahrzeug 1 kann, wie in der Fig. 1 gezeigt, ein Radfahrzeug sein. Alternativ kann das Nutzfahrzeug 1 auch ein Kettenfahrzeug sein. Die Hochrichtung H ist von den Achsen 5 bis 7 in Richtung des Fahrgestellrahmens 3 orientiert.

Das Fahrgestell 2 ist dazu geeignet, neben dem Fahrerhaus 4 einen austauschbaren und verwindungssteifen Aufbau 8 des Nutzfahrzeugs 1 zu tragen. Der Aufbau 8 kann beispielsweise eine Pritsche, ein Container, ein Koffer, ein Tank oder dergleichen sein. In der Fig. 1 ist ein Aufbau 8 in Form einer Pritsche gezeigt. Das Fahrerhaus 4 ist vorzugsweise gegen Beschuss, Sprengfallen, unkonventionelle Spreng- oder Brandvorrichtungen (USBV, Engl.: improvised explosive device, IED), Minen oder dergleichen geschützt.

Das Fahrgestell 2 ist jedoch auch für einen Anhänger (nicht gezeigt), insbesondere für einen Anhänger des Nutzfahrzeugs 1, geeignet. Das heißt, das Fahrgestell 2 kann Teil eines Anhängers, insbesondere eines Nutzfahrzeug-Anhängers oder Lastkraftwagen-Anhängers, sein. Das Nutzfahrzeug 1 und der Anhänger können ein Gespann, insbesondere ein Nutzfahrzeug-Gespann oder ein Lastkraftwagen-Gespann, bilden, wobei sowohl das Nutzfahrzeug 1 als auch der Anhänger ein derartiges Fahrgestell 2 aufweisen können. Das Nutzfahrzeug 1 kann jedoch auch mit einem Anhänger ohne ein derartiges Fahrgestell 2 zu einem Gespann kombiniert werden.

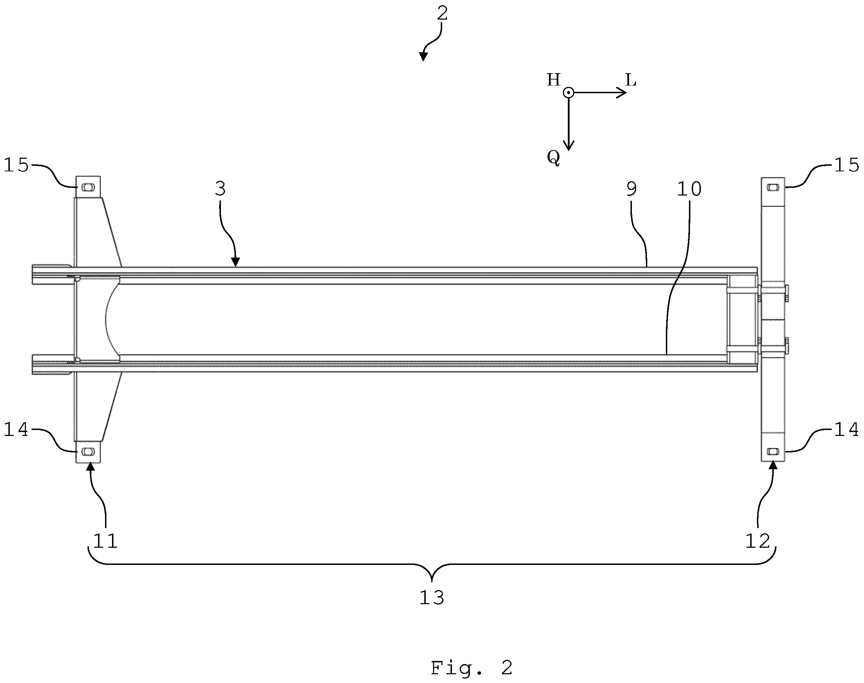

Die Fig. 2 zeigt eine stark vereinfachte schematische Aufsicht einer Ausführungsform eines Fahrgestells 2 für das Nutzfahrzeug 1. Das Fahrgestell 2 umfasst zwei in der Längsrichtung L verlaufende Längsträger 9, 10. Die Längsträger 9, 10 können jeweils aus mehreren Profilen oder Profilträgern, insbesondere Stahlprofilen, aufgebaut sein. Die Längsträger 9, 10 sind in der Querrichtung Q voneinander beabstandet angeordnet und verlaufen parallel zueinander. Die Längsträger 9, 10 können mit einer Vielzahl nicht gezeigter, in der Querrichtung Q verlaufender Quertraversen oder Traversen miteinander verbunden sein und so den biegesteifen und verwindungsweichen Fahrgestellrahmen 3 bilden. Die Traversen können mit den Längsträgern 9, 10 verschweißt, vernietet, verschraubt oder auf sonstige Art und Weise fest mit diesen verbunden sein.

Zum Tragen des Aufbaus 8 umfasst das Fahrgestell 2 einen frontseitig angeordneten Querträger 11, der in der Querrichtung Q und somit senkrecht zu den Längsträgern 9, 10 verläuft. Der Querträger 11 kann mehrteilig aufgebaut sein. Der Querträger 11 ist fest mit den Längsträgern 9, 10 verbunden, beispielsweise mit diesen verschraubt, vernietet oder verschweißt. Ferner umfasst das Fahrgestell 2 einen heckseitig angeordneten Pendelquerträger 12, der verschwenkbar an dem Fahrgestellrahmen 3 gelagert ist. Der Querträger 11 und der Pendelquerträger 12 bilden eine Aufbautrageeinrichtung 13 zum Tragen des Aufbaus 8. Die Aufbautrageeinrichtung 13 ist eine Aufbauschnittstelle oder kann als solche bezeichnet werden. Der Querträger 11 kann beispielsweise ein in der Querrichtung Q verlaufender Profilträger in der Form eines Hohlkastenträgers, eines U-Trägers, eines I-Trägers oder dergleichen sein. Selbiges gilt für den Pendelquerträger 12.

Die Längsträger 9, 10 sind vorzugsweise aus einem Stahlwerkstoff gefertigt. Die Längsträger 9, 10 können jedoch auch aus einem Titan-, Magnesium- oder Aluminiumwerkstoff gefertigt sein. Weiterhin können die Längsträger 9, 10 auch aus einem glasfaserverstärkten Kunststoff (GFK) oder einem kohlenstofffaserverstärkten Kunststoff (KFK oder CFK) gefertigt sein. Ebenso können der Querträger 11 und der Pendelquerträger 12 jeweils aus einem Stahl-, Titan-, Magnesium- oder Aluminiumwerkstoff, einem glasfaserverstärkten Kunststoff oder aus einem kohlenstofffaserverstärkten Kunststoff gefertigt sein.

Der Querträger 11 und der Pendelquerträger 12 weisen jeweils endseitig Auflageabschnitte 14, 15 auf, auf denen der Aufbau 8 aufliegt und an denen der Aufbau 8 befestigt werden kann. Die Auflageabschnitte 14, 15 können zur Aufnahme beispielsweise von Containern mit standardisierten Anschlussstücken ausgerüstet sein. Auch andere Ausgestaltungen von Endbereichen des Querträgers 11 und des Pendelquerträgers 12 sind möglich. Die Verbindung zwischen dem Querträger 11 beziehungsweise dem Pendelquerträger 12 und den Auflageabschnitten 14, 15 kann beispielsweise durch eine Schweißverbindung erfolgen, wobei allerdings auch eine Verschraubung oder Vernietung möglich ist.

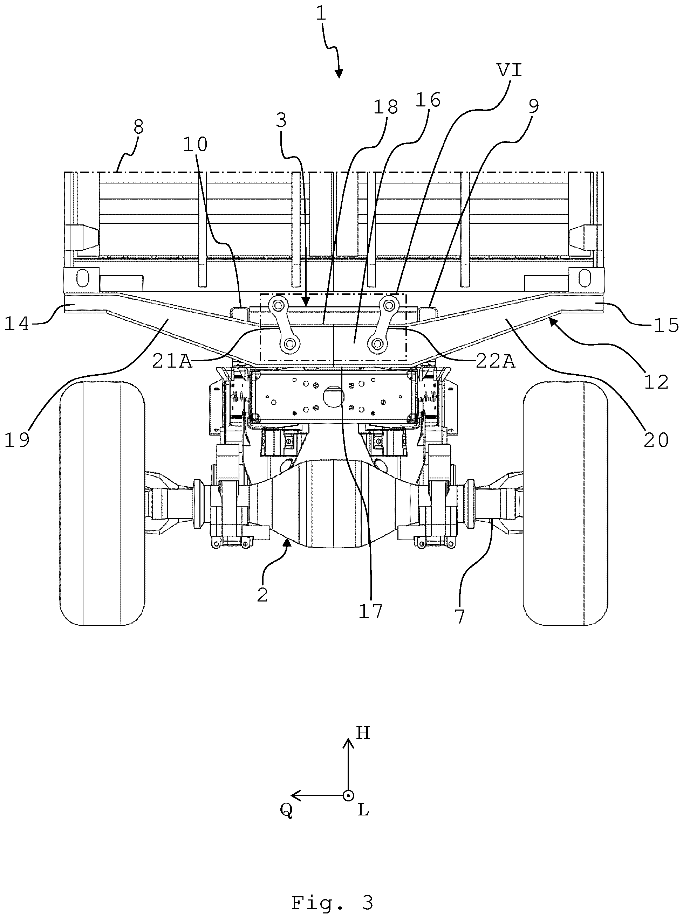

Die Fig. 3 zeigt eine Rückansicht des Nutzfahrzeugs 1. Hierbei ist der Aufbau 8 als Container dargestellt. Bevorzugt ist der Pendelquerträger 12 ein Hohlkastenträger oder Hohlkastenprofil. Beispielsweise kann der Pendelquerträger 12 ein Schweißbauteil sein, welches aus einer Vielzahl an Platten, Profilen oder dergleichen aufgebaut ist. Der Pendelquerträger 12 ist kastenförmig aufgebaut und umfasst einen quaderförmigen Basisabschnitt 16 mit einer Unterseite 17 und einer in der Hochrichtung H von der Unterseite 17 beabstandet angeordneten Oberseite 18. Der Basisabschnitt 16 ist zwischen zwei schräg positionierten Seitenabschnitten 19, 20 angeordnet. Die Seitenabschnitte 19, 20 erstrecken sich in der Hochrichtung H über die Oberseite 18 hinaus. Es ergibt sich somit ein V-förmiger Aufbau des Pendelquerträgers 12. An die Seitenabschnitte 19, 20 schließen sich die Auflageabschnitte 14, 15 an, auf denen der Aufbau 8 aufliegt. Wie zuvor erwähnt, kann der Aufbau 8 fest mit den Auflageabschnitten 14, 15 verbunden sein. Der Aufbau 8 ist jedoch lösbar, beispielsweise mit Hilfe einer Verschraubung, mit den Auflageabschnitten 14, 15 verbunden, so dass der Aufbau 8 ausgetauscht werden kann.

Das Fahrgestell 2 umfasst ferner ein erstes Schwingenelement 21A sowie ein zweites Schwingenelement 22A, mit deren Hilfe der Pendelquerträger 12 verschwenkbar an dem Fahrgestellrahmen 3 gelagert ist. Die Schwingenelemente 21A, 22A sind bevorzugt identisch aufgebaut. Die Schwingenelemente 21A, 22A sind jeweils drehbar an dem Fahrgestellrahmen 3 und an dem Pendelquerträger 12 gelagert.

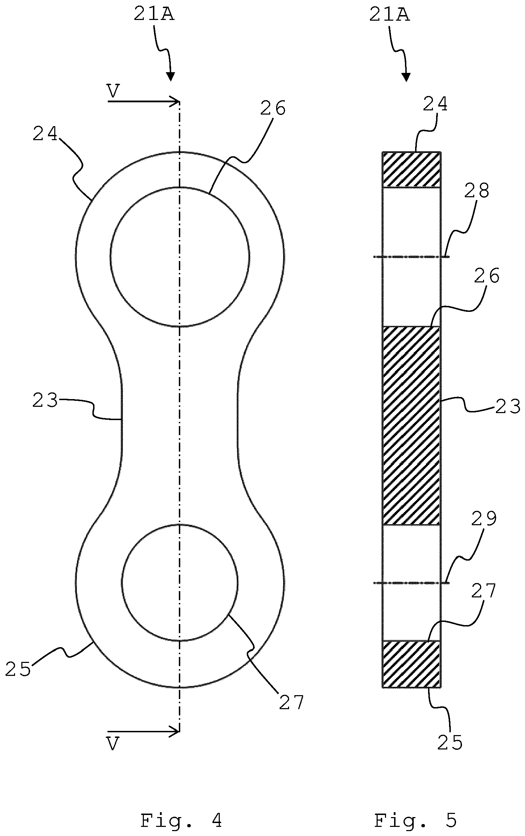

Wie die Fig. 4 und 5 anhand des ersten Schwingenelements 21A zeigen, umfasst dieses einen stabförmigen Basisabschnitt 23, der beispielsweise einen rechteckförmigen oder runden Querschnitt aufweisen kann. Endseitig an dem Basisabschnitt 23 sind ein erster Aufnahmeabschnitt 24 sowie ein zweiter Aufnahmeabschnitt 25 vorgesehen. Der Basisabschnitt 23 ist somit zwischen den Aufnahmeabschnitten 24, 25 angeordnet. Der Basisabschnitt 23 kann dabei eine kleinere Querschnittsfläche aufweisen als die Aufnahmeabschnitte 24, 25, so dass sich eine knochenförmige Geometrie des ersten Schwingenelements 21A ergibt. Das erste Schwingenelement 21A kann in der Aufsicht gemäß Fig. 4 jedoch auch eine rechteckförmige Geometrie aufweisen.

Jeder Aufnahmeabschnitt 24, 25 weist mittig einen Durchbruch 26, 27 auf, in dem beispielsweise eine Welle oder Achse aufnehmbar ist. Die Durchbrüche 26, 27 sind vorzugsweise als kreisrunde Bohrungen ausgebildet und rotationssymmetrisch zu einer jeweiligen Mittel- oder Symmetrieachse 28, 29 aufgebaut. In oder an den Durchbrüchen 26, 27 können Lagerelemente, wie beispielsweise Gleitlager oder Wälzlager, vorgesehen sein.

Wie zuvor erwähnt, ist das zweite Schwingenelement 22A identisch wie das erste Schwingenelement 21A aufgebaut, so dass auf eine detaillierte Beschreibung des zweiten Schwingenelements 22A verzichtet wird. Die Schwingenelemente 21A, 22A können beispielsweise aus einer Stahllegierung, einer Titanlegierung, einer Aluminiumlegierung, einer Magnesiumlegierung einem glasfaserverstärkten Kunststoffmaterial, einem kohlenstofffaserverstärkten Kunststoffmaterial oder aus einer Kombination dieser Werkstoffe gefertigt sein.

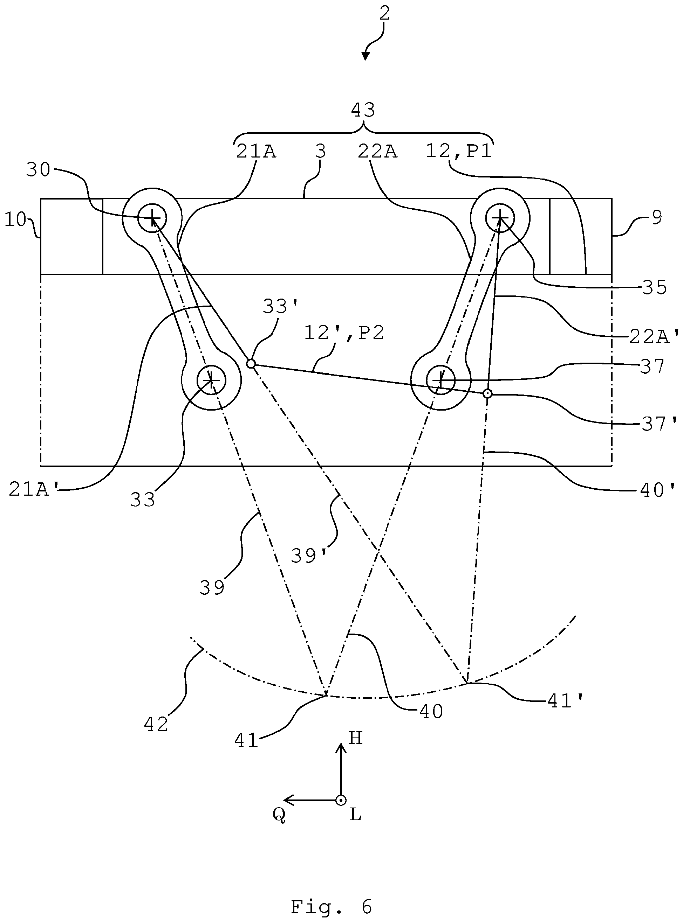

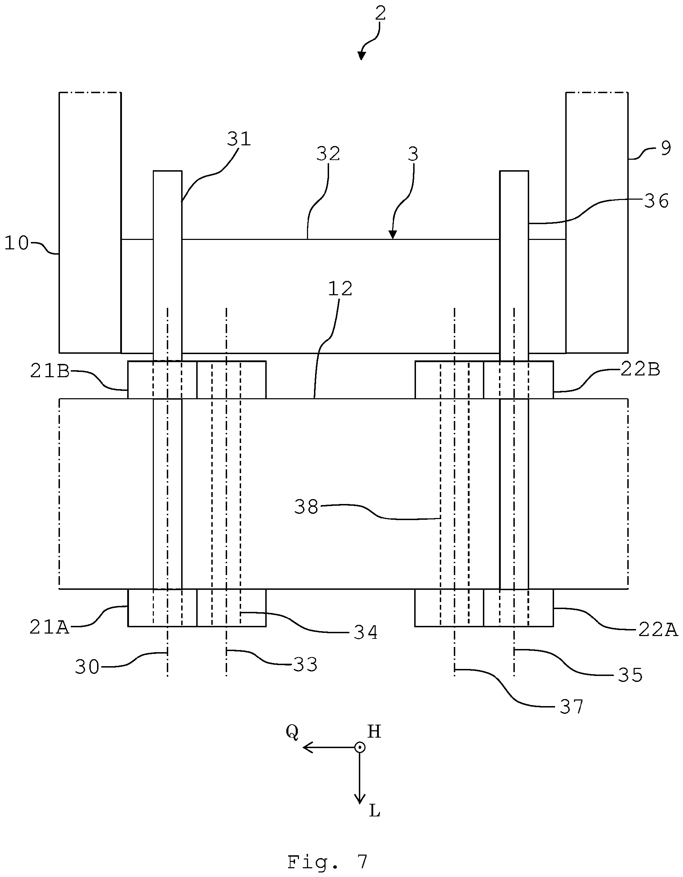

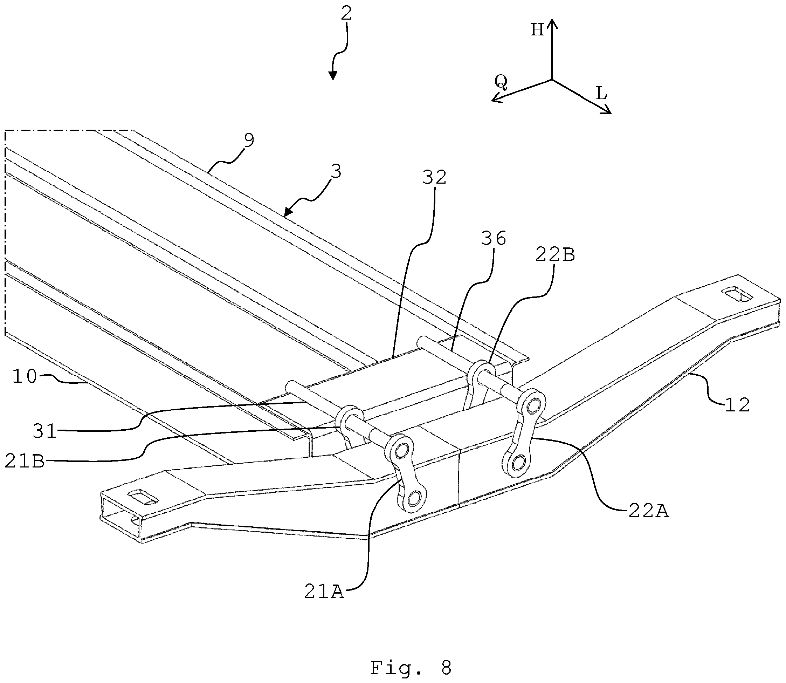

Die Fig. 6 zeigt die Detailansicht VI gemäß der Fig. 3. In der Fig. 6 ist nur ein Teil des Fahrgestells 2 dargestellt. Die Fig. 7 zeigt eine schematische Aufsicht auf das Fahrgestell 2. Auch in der Fig. 7 ist nur ein Teil des Fahrgestells 2 gezeigt. Die Fig. 8 zeigt eine schematische perspektivische Teilansicht des Fahrgestells 2. Nachfolgend wird auf die Fig. 6 bis 8 gleichzeitig Bezug genommen.

Es sind jeweils zwei erste Schwingenelemente 21A, 21B und zwei zweite Schwingenelemente 22A, 22B vorgesehen. Der Pendelquerträger 12 ist dabei in der Längsrichtung L betrachtet zwischen den beiden ersten Schwingenelementen 21A, 21B und zwischen den beiden zweiten Schwingenelementen 22A, 22B angeordnet. Es kann jedoch auch jeweils nur ein erstes Schwingenelement 21A und nur ein zweites Schwingenelement 22A vorgesehen sein. Die Schwingenelemente 21A, 21B, 22A, 22B sind identisch aufgebaut.

Die ersten Schwingenelemente 21A, 21B sind jeweils um eine erste Drehachse 30 drehbar an dem Fahrgestellrahmen 3 gelagert. Hierzu kann an dem Fahrgestellrahmen 3 ein Achsenelement 31 vorgesehen sein, welches in dem jeweiligen Durchbruch 26 der ersten Aufnahmeabschnitts 24 der ersten Schwingenelemente 21A, 21B drehbar aufgenommen ist. Das Achsenelement 31 kann fest mit dem Fahrgestellrahmen 3 verbunden sein. Hierzu kann ein kastenförmiger Verbindungsträger 32 vorgesehen sein, der zwischen den Längsträgern 9, 10 angeordnet ist und fest mit diesen verbunden, beispielsweise mit diesen verschweißt, vernietet oder verschraubt, ist. Alternativ kann das Achsenelement 31 auch drehbar an dem Fahrgestellrahmen 3 gelagert sein. In diesem Fall ist das Achsenelement 31 drehfest mit den ersten Schwingenelementen 21A, 21B verbunden.

Des Weiteren sind die ersten Schwingenelemente 21A, 21B um eine zweite Drehachse 33 drehbar an dem Pendelquerträger 12 gelagert. Hierzu kann an dem Pendelquerträger 12 ein bolzenförmiges Achsenelement 34 vorgesehen sein, das drehbar in dem jeweiligen Durchbruch 27 der zweiten Aufnahmeabschnitte 25 der ersten Schwingenelemente 21A, 21B aufgenommen ist. Alternativ kann das Achsenelement 34 auch drehbar an dem Pendelquerträger 12 gelagert sein. In diesem Fall ist das Achsenelement 34 drehfest mit den ersten Schwingenelementen 21A, 21B verbunden.

Die zweiten Schwingenelemente 22A, 22B sind um eine erste Drehachse 35 drehbar an dem Fahrgestellrahmen 3 gelagert. Hierzu kann der Fahrgestellrahmen 3 ein Achsenelement 36 aufweisen, das wie das Achsenelement 31 fest mit dem Verbindungsträger 32 verbunden ist. Das Achsenelement 36 ist in dem jeweiligen Durchbruch 26 der ersten Aufnahmeabschnitte 24 der zweiten Schwingenelemente 22A, 22B drehbar aufgenommen. Alternativ kann das Achsenelement 36 auch drehbar an dem Fahrgestellrahmen 3 gelagert sein. In diesem Fall ist das Achsenelement 36 drehfest mit den zweiten Schwingenelementen 22A, 22B verbunden.

Wie die ersten Schwingenelemente 21A, 21B sind auch die zweiten Schwingenelemente 22A, 22B um eine zweite Drehachse 37 drehbar an dem Pendelquerträger 12 gelagert. Der Pendelquerträger 12 weist hierzu ein Achsenelement 38 auf, das drehbar in dem jeweiligen Durchbruch 27 der zweiten Aufnahmeabschnitte 25 der zweiten Schwingenelemente 22A, 22B aufgenommen ist. Alternativ kann das Achsenelement 38 auch drehbar an dem Pendelquerträger 12 gelagert sein. In diesem Fall ist das Achsenelement 38 drehfest mit den zweiten Schwingenelementen 22A, 22B verbunden.

Das Achsenelement 31 kann als erstes Achsenelement des Fahrgestellrahmens 3 bezeichnet werden. Das Achsenelement 36 kann als zweites Achsenelement des Fahrgestellrahmens 3 bezeichnet werden. Das Achsenelement 34 kann als erstes Achsenelement des Pendelquerträgers 12 bezeichnet werden. Das Achsenelement 38 kann als zweites Achsenelement des Pendelquerträgers 12 bezeichnet werden.

Wie die Fig. 6 und 7 weiterhin zeigen, sind die beiden ersten Drehachsen 30, 35 der Schwingenelemente 21A, 21B, 22A, 22B in der Querrichtung Q betrachtet weiter voneinander beabstandet angeordnet als die beiden zweiten Drehachsen 33, 37 der Schwingenelemente 21A, 21B, 22A, 22B. Dadurch sind die ersten Schwingenelemente 21A, 21B und die zweiten Schwingenelemente 22A, 22B derart schräg zueinander positioniert, dass die Schwingenelemente 21A, 21B, 22A, 22B entgegen der Hochrichtung H betrachtet aufeinander zu laufen und umgekehrt entlang der Hochrichtung H betrachtet voneinander weg laufen. Die Schwingenelemente 21A, 21B, 22A, 22B sind somit V-förmig angeordnet.

Eine durch die beiden Drehachsen 30, 33 der ersten Schwingenelemente 21A, 21B verlaufende Verlängerung 39 der ersten Schwingenelemente 21A, 21B und eine durch die beiden Drehachsen 35, 37 der zweiten Schwingenelemente 22A, 22B verlaufende Verlängerung 40 der zweiten Schwingenelemente 22A, 22B treffen oder schneiden einander in einem Bewegungspol oder Momentanpol 41. Dabei kann sowohl den Schwingenelementen 21A, 22A als auch den Schwingenelementen 21B, 22B jeweils ein derartiger Momentanpol 41 zugeordnet sein. Diese beiden Momentanpole 41 der Schwingenelemente 21A, 21B, 22A, 22B können auf einer gemeinsamen Achse (nicht gezeigt) liegen, die sich entlang der Längsrichtung L erstreckt.

Unter einer "Verlängerung" ist vorliegend jeweils eine durch die Drehachsen 30, 33 beziehungsweise durch die Drehachsen 35, 37 verlaufende Gerade zu verstehen. Unter einem "Momentanpol" ist bei einer ebenen Bewegung eines starren Körpers, beispielsweise des Pendelquerträgers 12, derjenige Raumpunkt zu verstehen, um den der Körper als nur drehend angesehen und behandelt werden kann. Der Momentanpol 41 ist bei einem Verschwenken des Pendelquerträgers 12 verlagerbar. Insbesondere verlagert sich der Momentanpol 41 bei einem Verschwenken des Pendelquerträgers 12 entlang der Hochrichtung H sowie entlang der Querrichtung Q. Entlang der Längsrichtung L verlagert sich der Momentanpol 41 jedoch nicht.

Die Fig. 6 zeigt den Pendelquerträger 12 einmal in einer Neutral- oder Ausgangsposition P1 sowie einmal stark schematisiert in einer Auslenkposition P2. Dabei sind in der Fig. 6 nur die Schwingenelemente 21A, 22A gezeigt. Die Anzahl der Auslenkpositionen P2 ist beliebig. In der Auslenkposition P2 sind die Bezugszeichen der ausgelenkten Bauteile oder Elemente mit einem Oberstrich versehen. In der Auslenkposition P2 sind der Pendelquerträger 12', die Schwingenelemente 21A', 22A', die zweiten Drehachsen 33', 37', die Verlängerungen 39', 40' und der Momentanpol 41' ausgelenkt. "Ausgelenkt" heißt dabei gegenüber der Ausgangsposition P1 verlagert.

Bei dem Verschwenken des Pendelquerträgers 12 von der Ausgangsposition P1 in die Auslenkposition P2 beziehungsweise in verschiedene Auslenkpositionen P2 bewegt sich der Momentanpol 41, 41' auf einer Bahnkurve 42. Die Bahnkurve 42 liegt in einer von der Hochrichtung H und der Querrichtung Q aufgespannten Ebene. Die Bahnkurve 42 kann kreisförmig, elliptisch oder oval sein. Darunter ist zu verstehen, dass die Bahnkurve 42 Teil eines Kreises, einer Ellipse oder eines Ovals sein kann.

Der Fahrgestellrahmen 3, der Pendelquerträger 12, die ersten Schwingenelemente 21A, 21B und die zweiten Schwingenelemente 22A, 22B bilden ein Koppelgetriebe 43 des Fahrgestells 2. Ein derartiges Koppelgetriebe 43 umfasst ein Gestell, eine oder mehrere Schwingen sowie eine Koppel. Vorliegend ist der Fahrgestellrahmen 3 das Gestell des Koppelgetriebes 43, der nicht unmittelbar mit dem Fahrgestellrahmen 3 verbundene Pendelquerträger 12 ist die Koppel und die Schwingenelemente 21A, 21B, 22A, 22B sind die Schwingen des Koppelgetriebes 43.

Wie der Fig. 6 weiterhin zu entnehmen ist, ist der Momentanpol 41, 41' in jeder Position P1, P2 in der Hochrichtung H betrachtet stets unterhalb des Pendelquerträgers 12 beziehungsweise unterhalb des Fahrgestellrahmens 3 positioniert. Die Hochrichtung H ist dabei, wie zuvor erwähnt, von den Achsen 5 bis 7 in Richtung des Fahrgestellrahmens 3, insbesondere in Richtung des Pendelquerträgers 12, orientiert.

Dadurch, dass der Momentanpol 41, 41' in der Hochrichtung H betrachtet stets unterhalb des Pendelquerträgers 12 angeordnet ist, kann sich der Fahrgestellrahmen 3, beispielsweise bei einer Geländefahrt, stark verwinden, ohne dass auf den Aufbau 8 übermäßig Kräfte aufgebracht werden beziehungsweise ohne dass aufgrund des verwindungssteifen Aufbaus 8 übermäßige Verformungen und Spannungen in dem Fahrgestellrahmen 3 auftreten. Auch wird die Einleitung hoher Verwindungskräfte in den Aufbau 8 verhindert.

Wie die Fig. 6 zeigt, sind die beiden zweiten Drehachsen 33, 33', 37, 37' der Schwingenelemente 21A, 21B, 22A, 22B in der Hochrichtung H betrachtet zwischen den beiden ersten Drehachsen 30, 35 und dem Momentanpol 41, 41' positioniert. Dabei sind die beiden ersten Drehachsen 30, 35 in der Hochrichtung H betrachtet auf derselben Höhe angeordnet. Ferner sind auch die zweiten Drehachsen 33, 37 in der Ausgangsposition P1 in der Hochrichtung H betrachtet auf derselben Höhe angeordnet. In der Auslenkposition P2 sind die beiden zweiten Drehachsen 33', 37' in der Hochrichtung H betrachtet jedoch auf unterschiedlichen Höhen positioniert.

Der Pendelquerträger 12 wiederum ist in der Längsrichtung L betrachtet zwischen den Schwingenelementen 21A, 21B, 22A, 22B angeordnet. Dabei sind die Schwingenelemente 21B, 22B in der Längsrichtung betrachtet zwischen dem Pendelquerträger 12 und dem Fahrgestellrahmen 3, insbesondere dem Verbindungsträger 32 des Fahrgestellrahmens 3, angeordnet. Die beiden Achsenelemente 31, 36 sind an dem Pendelquerträger 12 vorbeigeführt. Insbesondere sind die beiden Achsenelemente 31, 36 zwischen den beiden Seitenabschnitten 19, 20 hindurchgeführt. Die beiden ersten Drehachsen 30, 35 können dabei in der Hochrichtung H betrachtet unterhalb der Auflageabschnitte 14, 15 angeordnet sein.

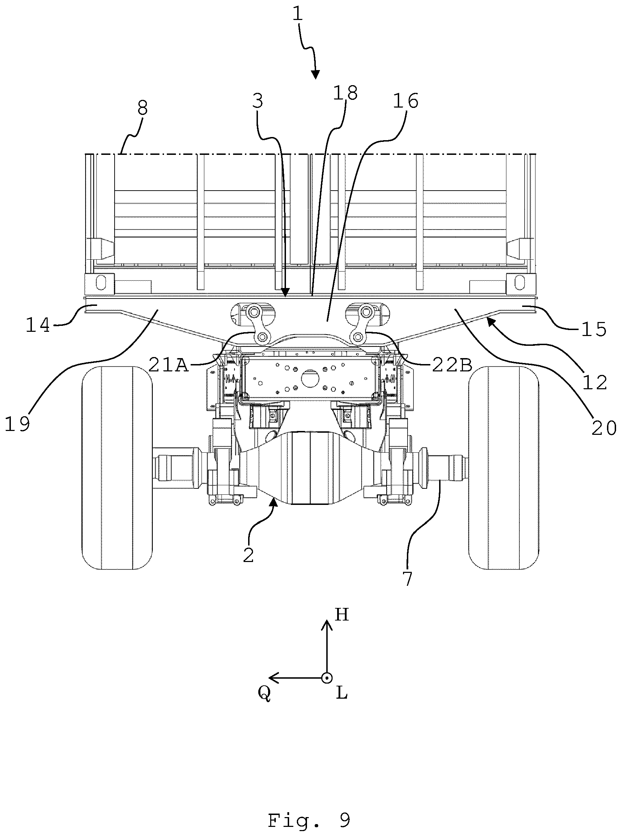

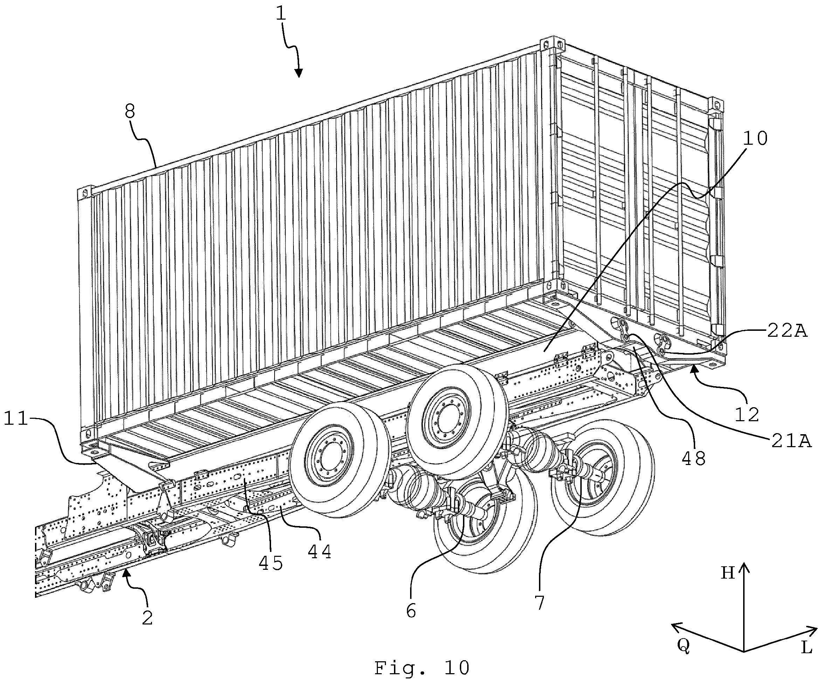

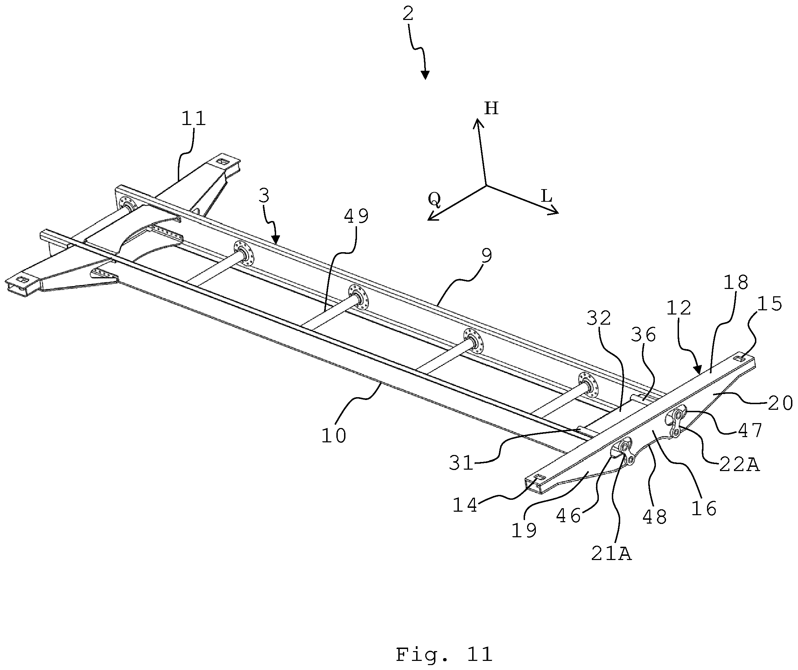

Die Fig. 9 zeigt eine schematische Rückansicht einer weiteren Ausführungsform eines Nutzfahrzeugs 1. Das Nutzfahrzeug 1 gemäß der Fig. 9 unterscheidet sich von dem Nutzfahrzeug 1 gemäß der Fig. 1 nur dadurch, dass ein alternativ ausgestalteter Pendelquerträger 12 vorgesehen ist. Die Fig. 10 zeigt eine schematische perspektivische Ansicht des Nutzfahrzeugs 1 gemäß der Fig. 9. Die Fig. 11 zeigt eine schematische perspektivische Ansicht einer Ausführungsform eines Fahrgestells 2 für das Nutzfahrzeug 1 gemäß der Fig. 9. Nachfolgend wird auf die Fig. 9 bis 11 gleichzeitig Bezug genommen.

Die Längsträger 9, 10 können jeweils mit mehreren, beispielsweise zwei, sich in der Längsrichtung L erstreckenden Profilträgern 44, 45 des Fahrgestells 2 verbunden sein. Der Pendelquerträger 12 umfasst einen ersten Durchbruch 46, durch den das Achsenelement 31 hindurchgeführt ist, sowie einen zweiten Durchbruch 47, durch den das Achsenelement 36 hindurchgeführt ist. Die Durchbrüche 46, 47 können beispielsweise oval oder rechteckförmig mit verrundeten Ecken sein. Die Durchbrüche 46, 47 durchbrechen den Pendelquerträger 12 entlang der Längsrichtung L vollständig.

Bei dieser Ausführungsform des Pendelquerträgers 12 weist dieser eine ebene Oberseite 18 beziehungsweise einen durchgehenden Obergurt auf und umfasst wiederum einen Basisabschnitt 16 sowie zwei beidseits des Basisabschnitts 16 angeordnete Seitenabschnitte 19, 20. Die Seitenabschnitte 19, 20 erstrecken sich in diesem Fall jedoch nicht über die Oberseite 18 hinaus. Unterseitig, das heißt der Oberseite 18 abgewandt, umfasst der Pendelquerträger 12 eine Ausnehmung oder Freistellung 48, durch die beispielsweise eine Anhängerkupplung hindurchgeführt werden kann. An die Anhängerkupplung kann der zuvor erwähnte Anhänger angekuppelt werden. Die Längsträger 9, 10 können mit Hilfe einer Vielzahl an Quertraversen oder Traversen 49, von denen in der Fig. 11 nur eine mit einem Bezugszeichen versehen ist, fest miteinander verbunden sein. Die Traversen 49 verlaufen in der Querrichtung Q.

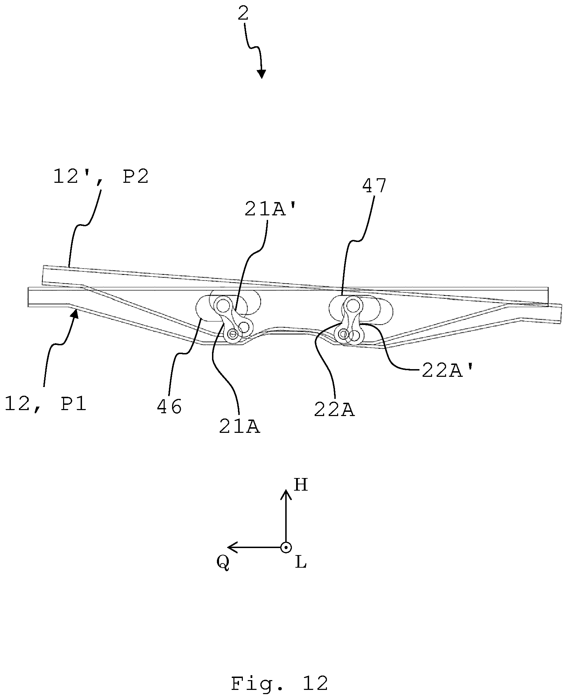

Wie die Fig. 12 zeigt, kann auch der Pendelquerträger 12 des Nutzfahrzeugs 1 gemäß der Fig. 9 von einer Ausgangsposition P1 in eine beliebige Anzahl an Auslenkpositionen P2 ausgelenkt werden.

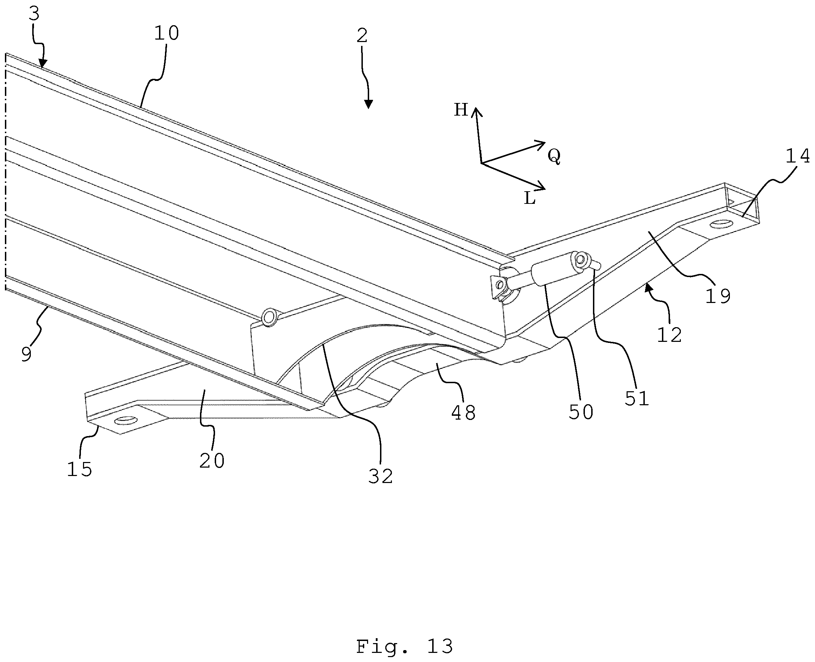

Die Fig. 13 zeigt eine schematische perspektivische Teilansicht einer weiteren Ausführungsform eines Fahrgestells 2 für das Nutzfahrzeug 1 gemäß der Fig. 9. Das Fahrgestell 2 gemäß der Fig. 13 unterscheidet sich von dem Fahrgestell 2 gemäß der Fig. 11 nur dadurch, dass eine Feder- und/oder Dämpfungseinrichtung 50 vorgesehen ist, welche zwischen dem Fahrgestellrahmen 3 und dem Pendelquerträger 12 angeordnet ist. Die Feder- und/oder Dämpfungseinrichtung 50 kann beispielsweise eine Zylinderfeder und/oder einen Dämpfungszylinder aufweisen. Beispielsweise ist die Feder- und/oder Dämpfungseinrichtung 50 rückseitig an dem Pendelquerträger 12 angebracht und verbindet diesen mit dem Längsträger 10. Hierzu kann an dem Pendelquerträger 12 ein Befestigungselement 51, beispielsweise in Form eines Stahlwinkels oder eines Bolzens, vorgesehen sein. Die Feder- und/oder Dämpfungseinrichtung 50 kann auch bei dem Nutzfahrzeug 1 gemäß der Fig. 1 eingesetzt werden.

Es können mehrere Feder- und/oder Dämpfungseinrichtungen 50 vorgesehen sein. Beispielsweise ist beidseits des Fahrgestellrahmens 3 jeweils eine Feder- und/oder Dämpfungseinrichtung 50 vorgesehen. Die Anzahl der Feder- und/oder Dämpfungseinrichtungen 50 ist jedoch beliebig.

### BEZUGSZEICHENLISTE

- 1: Nutzfahrzeug
- 2: Fahrgestell
- 3: Fahrgestellrahmen
- 4: Fahrerhaus
- 5: Achse
- 6: Achse
- 7: Achse
- 8: Aufbau
- 9: Längsträger
- 10: Längsträger
- 11: Querträger
- 12: Pendelquerträger
- 12': Pendelquerträger
- 13: Aufbautrageeinrichtung
- 14: Auflageabschnitt
- 15: Auflageabschnitt
- 16: Basisabschnitt
- 17: Unterseite
- 18: Oberseite
- 19: Seitenabschnitt
- 20: Seitenabschnitt
- 21A: Schwingenelement
- 21A': Schwingenelement
- 21B: Schwingenelement
- 22A: Schwingenelement
- 22A': Schwingenelement
- 22B: Schwingenelement
- 23: Basisabschnitt
- 24: Aufnahmeabschnitt
- 25: Aufnahmeabschnitt
- 26: Durchbruch
- 27: Durchbruch
- 28: Symmetrieachse
- 29: Symmetrieachse
- 30: Drehachse
- 31: Achsenelement
- 32: Verbindungsträger
- 33: Drehachse
- 33': Drehachse
- 34: Achsenelement
- 35: Drehachse
- 36: Achsenelement
- 37: Drehachse
- 37': Drehachse
- 38: Achsenelement
- 39: Verlängerung
- 39': Verlängerung
- 40: Verlängerung
- 40': Verlängerung
- 41: Momentanpol
- 41': Momentanpol
- 42: Bahnkurve
- 43: Koppelgetriebe
- 44: Profilträger
- 45: Profilträger
- 46: Durchbruch
- 47: Durchbruch
- 48: Freistellung
- 49: Traverse
- 50: Feder- und/oder Dämpfungseinrichtung
- 51: Befestigungselement

- g: Schwerkraftrichtung
- H: Hochrichtung
- L: Längsrichtung
- P1: Ausgangsposition
- P2: Auslenkposition
- Q: Querrichtung

## Patentansprüche

1. Fahrgestell (2) für ein Nutzfahrzeug (1), insbesondere für ein militärisches Nutzfahrzeug, mit
einem Fahrgestellrahmen (3), der sich entlang einer Längsrichtung (L) des Fahrgestells (2) erstreckt,
einem fest mit dem Fahrgestellrahmen (3) verbundenen Querträger (11) zum Tragen eines auf dem Fahrgestell (2) platzierbaren austauschbaren Aufbaus (8),
einem verschwenkbar an dem Fahrgestellrahmen (3) gelagerten Pendelquerträger (12, 12') zum Tragen des Aufbaus (8),
einem ersten Schwingenelement (21A, 21A', 21B), welches um eine erste Drehachse (30) drehbar an dem Fahrgestellrahmen (3) gelagert ist und welches um eine zweite Drehachse (33, 33') drehbar an dem Pendelquerträger (12, 12') gelagert ist, und
einem zweiten Schwingenelement (22A, 22A', 22B), welches um eine erste Drehachse (35) drehbar an dem Fahrgestellrahmen (3) gelagert ist und welches um eine zweite Drehachse (37, 37') drehbar an dem Pendelquerträger (12, 12') gelagert ist
wobei eine Verlängerung (39, 39') des ersten Schwingenelements (21A, 21A', 21B) und eine Verlängerung (40, 40') des zweiten Schwingenelements (22A, 22A', 22B) einander in einem Momentanpol (41, 41') schneiden, welcher in einer Hochrichtung (H) des Fahrgestells (2) betrachtet unterhalb des Pendelquerträgers (12, 12') positioniert ist, und
wobei die beiden zweiten Drehachsen (33, 33', 37, 37') der Schwingenelemente (21A, 21A', 21B, 22A, 22A', 22B) in der Hochrichtung (H) betrachtet zwischen den beiden ersten Drehachsen (30, 35) der Schwingenelemente (21A, 21A', 21B, 22A, 22A', 22B) und dem Momentanpol (41, 41') positioniert sind.

2. Fahrgestell nach Anspruch 1,
**dadurch gekennzeichnet,**
**dass** die beiden ersten Drehachsen (30, 35) der Schwingenelemente (21A, 21A', 21B, 22A, 22A', 22B) in einer Querrichtung (Q) des Fahrgestells (2) betrachtet weiter voneinander beabstandet angeordnet sind als die beiden zweiten Drehachsen (33, 33', 37, 37') der Schwingenelemente (21A, 21A', 21B, 22A, 22A', 22B), so dass das erste Schwingenelement (21A, 21A', 21B) und das zweite Schwingenelement (22A, 22A', 22B) schräg zueinander positioniert sind.

3. Fahrgestell nach Anspruch 2,
**dadurch gekennzeichnet,**
**dass** das erste Schwingenelement (21A, 21A', 21B) und das zweite Schwingenelement (22A, 22A', 22B) derart schräg zueinander positioniert sind, dass das erste Schwingenelement (21A, 21A', 21B) und das zweite Schwingenelement (22A, 22A', 22B) aufeinander zu laufen.

4. Fahrgestell nach einem der Ansprüche 1 - 3,
**dadurch gekennzeichnet,**
**dass** die beiden ersten Drehachsen (30, 35) der Schwingenelemente in der Hochrichtung (H) betrachtet auf derselben Höhe positioniert sind, wobei die beiden zweiten Drehachsen (33, 37) der Schwingenelemente (21A, 21A', 21B, 22A, 22A', 22B) in einer Ausgangsposition (P1) des Pendelquerträgers (12, 12') in der Hochrichtung (H) betrachtet auf derselben Höhe positioniert sind.

5. Fahrgestell nach einem der Ansprüche 1 - 4,
**dadurch gekennzeichnet,**
**dass** jeweils zwei erste Schwingenelemente (21A, 21A', 21B) und zwei zweite Schwingenelemente (22A, 22A', 22B) vorgesehen sind, wobei der Pendelquerträger (12, 12') in der Längsrichtung (L) betrachtet jeweils zwischen den beiden ersten Schwingenelementen (21A, 21A', 21B) und zwischen den beiden zweiten Schwingenelementen (22A, 22A', 22B) angeordnet ist.

6. Fahrgestell nach einem der Ansprüche 1 - 5,
**dadurch gekennzeichnet,**
**dass** das erste Schwingenelement (21A, 21A', 21B) um seine erste Drehachse (30) drehbar an einem an dem Fahrgestellrahmen (3) angebrachten ersten Achsenelement (31) gelagert ist, wobei das zweite Schwingenelement (22A, 22A', 22B) um seine erste Drehachse (35) drehbar an einem an dem Fahrgestellrahmen (3) angebrachten zweiten Achsenelement (36) gelagert ist.

7. Fahrgestell nach Anspruch 6,
**dadurch gekennzeichnet,**
**dass** das erste Achsenelement (31) und das zweite Achsenelement (36) in der Längsrichtung (L) betrachtet an dem Pendelquerträger (12, 12') vorbei oder durch diesen hindurchgeführt sind.

8. Fahrgestell nach Anspruch 6,
**dadurch gekennzeichnet,**
**dass** der Pendelquerträger (12, 12') einen ersten Seitenabschnitt (19), einen zweiten Seitenabschnitt (20) und einen zwischen dem ersten Seitenabschnitt (19) und dem zweiten Seitenabschnitt (20) angeordneten Basisabschnitt (16) umfasst, wobei sich der erste Seitenabschnitt (19) und der zweite Seitenabschnitt (20) über eine Oberseite (18) des Basisabschnitts (16) herauserstrecken, und wobei das erste Achsenelement (31) und das zweite Achsenelement (36) zwischen dem ersten Seitenabschnitt (19) und dem zweiten Seitenabschnitt (20) an dem Pendelquerträger (12, 12') vorbeigeführt sind.

9. Fahrgestell nach Anspruch 7,
**dadurch gekennzeichnet,**
**dass** der Pendelquerträger (12, 12') einen ersten Durchbruch (46), durch welchen das erste Achsenelement (31) hindurchgeführt ist, und einen zweiten Durchbruch (47) umfasst, durch welchen das zweite Achsenelement (36) hindurchgeführt ist.

10. Fahrgestell nach einem der Ansprüche 1 - 9,
**dadurch gekennzeichnet,**
**dass** der Querträger (11) frontseitig an dem Fahrgestellrahmen (3) angeordnet ist, wobei der Pendelquerträger (12, 12') heckseitig an dem Fahrgestellrahmen (3) angeordnet ist.

11. Fahrgestell nach einem der Ansprüche 1 -10,
ferner umfassend
eine Feder- und/oder Dämpfungseinrichtung (50), welche zwischen dem Fahrgestellrahmen (3) und dem Pendelquerträger (12, 12') angeordnet ist.

12. Nutzfahrzeug (1), insbesondere militärisches Nutzfahrzeug, mit einem Fahrgestell (2) nach einem der Ansprüche 1 - 11.

13. Nutzfahrzeug nach Anspruch 12,
ferner umfassend
einen austauschbaren Aufbau (8), welcher auf dem Querträger (11) und auf dem Pendelquerträger (12, 12') platziert ist.

## Claims

1. Chassis (2) for a commercial vehicle (1), in particular for a military commercial vehicle, comprising
a chassis frame (3) extending along a longitudinal direction (L) of the chassis (2),
a cross beam (11) firmly connected to the chassis frame (3) for supporting an interchangeable superstructure (8) which can be placed on the chassis (2),
a pendulum cross beam (12, 12') pivotably mounted on the chassis frame (3) for supporting the superstructure (8),
a first swing arm element (21A, 21A', 21B) which is rotatably mounted on the chassis frame (3) about a first axis of rotation (30) and which is rotatably mounted on the pendulum cross beam (12, 12') about a second axis of rotation (33, 33'), and
a second swing arm element (22A, 22A', 22B) which is rotatably mounted on the chassis frame (3) about a first axis of rotation (35) and which is rotatably mounted on the pendulum cross beam (12, 12') about a second axis of rotation (37, 37'),
wherein an extension (39, 39') of the first swing arm element (21A, 21A', 21B) and an extension (40, 40') of the second swing arm element (22A, 22A', 22B) intersect one another at an instantaneous center (41, 41') which is positioned below the pendulum cross beam (12, 12'), as viewed in a height direction (H) of the chassis (2), and
wherein the two second axes of rotation (33, 33', 37, 37') of the swing arm elements (21A, 21A', 21B, 22A, 22A', 22B) are positioned between the two first axes of rotation (30, 35) of the swing arm elements (21A, 21A', 21B, 22A, 22A', 22B) and the instantaneous center (41, 41') as viewed in the height direction (H).

2. Chassis according to claim 1,
**characterized in that**
the two first axes of rotation (30, 35) of the swing arm elements (21A, 21A', 21B, 22A, 22A', 22B), viewed in a transverse direction (Q) of the chassis (2), are arranged at a greater distance from one another than the two second axes of rotation (33, 33', 37, 37') of the swing arm elements (21A, 21A', 21B, 22A, 22A', 22B) so that the first swing arm element (21A, 21A', 21B) and the second swing arm element (22A, 22A', 22B) are positioned obliquely to each other.

3. Chassis according to claim 2,
**characterized in that**
the first swing arm element (21A, 21A', 21B) and the second swing arm element (22A, 22A', 22B) are positioned obliquely with respect to one another such that the first swing arm element (21A, 21A', 21B) and the second swing arm element (22A, 22A', 22B) run towards one another.

4. Chassis according to one of claims 1 - 3,
**characterized in that**
the two first axes of rotation (30, 35) of the swing arm elements (21A, 21A', 21B, 22A, 22A', 22B) are positioned at the same height as viewed in the height direction (H), the two second axes of rotation (33, 37) of the swing arm elements (21A, 21A', 21B, 22A, 22A', 22B) being positioned at the same height as viewed in the height direction (H) in a starting position (P1) of the pendulum cross beam (12, 12').

5. Chassis according to one of claims 1 - 4,
**characterized in that**
in each case two first swing arm elements (21A, 21A', 21B) and two second swing arm elements (22A, 22A', 22B) are provided, the pendulum cross beam (12, 12') being arranged, as viewed in the longitudinal direction (L), in each case between the two first swing arm elements (21A, 21A', 21B) and between the two second swing arm elements (22A, 22A', 22B).

6. Chassis according to one of claims 1 - 5,
**characterized in that**
the first swing arm element (21A, 21A', 21B) is mounted rotatably about its first axis of rotation (30) on a first axle element (31) attached to the chassis frame (3), the second swing arm element (22A, 22A', 22B) being mounted rotatably about its first axis of rotation (35) on a second axle element (36) attached to the chassis frame (3).

7. Chassis according to claim 6,
**characterized in that**
the first axle element (31) and the second axle element (36), as viewed in the longitudinal direction (L), are guided past or through the pendulum cross beam (12, 12').

8. Chassis according to claim 6,
**characterized in that**
the pendulum cross beam (12, 12') comprises a first side section (19), a second side section (20) and a base section (16) arranged between the first side section (19) and the second side section (20), wherein the first side section (19) and the second side section (20) extend out over an upper side (18) of the base section (16), and wherein the first axle element (31) and the second axle element (36) are passed between the first side section (19) and the second side section (20) past the pendulum cross beam (12, 12').

9. Chassis according to claim 7,
**characterized in that**
the pendulum cross beam (12, 12') comprises a first opening (46) through which the first axle element (31) is passed and a second opening (47) through which the second axle element (36) is passed.

10. Chassis according to one of claims 1 - 9,
**characterized in that**
the cross beam (11) is arranged at the front on the chassis frame (3), the pendulum cross beam (12, 12') being arranged at the rear of the chassis frame (3).

11. Chassis according to one of claims 1 - 10,
further comprising
a spring and/or damping apparatus (50) which is arranged between the chassis frame (3) and the pendulum cross beam (12, 12').

12. Commercial vehicle (1), in particular military commercial vehicle, comprising a chassis (2) according to one of claims 1-11.

13. Commercial vehicle according to claim 12,
further comprising
an interchangeable superstructure (8), which is placed on the cross beam (11) and on the pendulum cross beam (12, 12').

## Revendications

1. Châssis (2) pour un véhicule commercial (1), en particulier pour un véhicule commercial militaire, comprenant
un cadre de châssis (3) s'étendant dans une direction longitudinale (L) du châssis (2),
une traverse (11) reliée solidement au cadre de châssis (3), destinée à supporter une superstructure interchangeable (8) qui peut être placée sur le châssis (2),
une traverse à mouvement de pendule (12, 12') montée pivotante sur le cadre de châssis (3), destinée à supporter la superstructure (8),
un premier élément bras oscillant (21A, 21A', 21B) qui est monté mobile en rotation sur le cadre de châssis (3) autour d'un premier axe de rotation (30) et qui est monté mobile en rotation sur la traverse à mouvement de pendule (12, 12') autour d'un second axe de rotation (33, 33'), et
un second élément bras oscillant (22A, 22A', 22B) qui est monté mobile en rotation sur le cadre de châssis (3) autour d'un premier axe de rotation (35) et qui est monté mobile en rotation sur la traverse à mouvement de pendule (12, 12') autour d'un second axe de rotation (37, 37'),
dans lequel un prolongement (39, 39') du premier élément bras oscillant (21A, 21A', 21B) et un prolongement (40, 40') du second élément bras oscillant (22A, 22A', 22B) se coupent au niveau d'un centre instantané (41, 41') qui est positionné au-dessous de la traverse à mouvement de pendule (12, 12') lorsqu'observés dans une direction de hauteur (H) du châssis (2), et
dans lequel les deux seconds axes de rotation (33, 33', 37, 37') des éléments bras oscillants (21A, 21A', 21B, 22A, 22A', 22B) sont positionnés entre les deux premiers axes de rotation (30, 35) des éléments bras oscillants (21A, 21A', 21B, 22A, 22A', 22B) et le centre instantané (41, 41') lorsqu'observés dans la direction de hauteur (H).

2. Châssis selon la revendication 1,
**caractérisé en ce que**
les deux premiers axes de rotation (30, 35) des éléments bras oscillants (21A, 21A', 21B, 22A, 22A', 22B), lorsqu'observés dans une direction transversale (Q) du châssis (2), sont disposés à une distance l'un de l'autre plus grande que celle séparant les deux seconds axes de rotation (33, 33', 37, 37') des éléments bras oscillants (21A, 21A', 21B, 22A, 22A', 22B) de sorte que le premier élément bras oscillant (21A, 21A', 21B) et le second élément bras oscillant (22A, 22A', 22B) soient positionnés obliquement l'un par rapport à l'autre.

3. Châssis selon la revendication 2,
**caractérisé en ce que**
le premier élément bras oscillant (21A, 21A', 21B) et le second élément bras oscillant (22A, 22A', 22B) sont positionnés obliquement l'un par rapport à l'autre de sorte que le premier élément bras oscillant (21A, 21A', 21B) et le second élément bras oscillant (22A, 22A', 22B) s'étendent l'un en direction de l'autre.

4. Châssis selon l'une des revendications 1 à 3,
**caractérisé en ce que**
les deux premiers axes de rotation (30, 35) des éléments bras oscillants (21A, 21A', 21B, 22A, 22A', 22B) sont positionnés à la même hauteur lorsqu'observés dans la direction de hauteur (H), les deux seconds axes de rotation (33, 37) des éléments bras oscillants (21A, 21A', 21B, 22A, 22A', 22B) étant positionnés à la même hauteur lorsqu'observés dans la direction de hauteur (H) dans une position initiale (P1) de la traverse à mouvement de pendule (12, 12').

5. Châssis selon l'une des revendications 1 à 4,
**caractérisé en ce que**
deux premiers éléments bras oscillants (21A, 21A', 21B) et deux seconds éléments bras oscillants (22A, 22A', 22B) sont prévus dans chaque cas, la traverse à mouvement de pendule (12, 12') étant disposée, lorsqu'observée dans la direction longitudinale (L), dans chaque cas entre les deux premiers éléments bras oscillants (21A, 21A', 21B) et entre les deux seconds éléments bras oscillants (22A, 22A', 22B).

6. Châssis selon l'une des revendications 1 à 5,
**caractérisé en ce que**
le premier élément bras oscillant (21A, 21A', 21B) est monté mobile en rotation autour de son premier axe de rotation (30) sur un premier élément arbre (31) fixé au cadre de châssis (3), le second élément bras oscillant (22A, 22A', 22B) étant monté mobile en rotation autour de son premier axe de rotation (35) sur un second élément arbre (36) fixé au cadre de châssis (3).

7. Châssis selon la revendication 6,
**caractérisé en ce que**
le premier élément arbre (31) et le second élément arbre (36), lorsqu'observés dans la direction longitudinale (L), sont guidés au-delà de la traverse à mouvement de pendule (12, 12'), ou à travers cette dernière.

8. Châssis selon la revendication 6,
**caractérisé en ce que**
la traverse à mouvement de pendule (12, 12') comprend une première section latérale (19), une seconde section latérale (20) et une section de base (16) disposée entre la première section latérale (19) et la seconde section latérale (20), dans lequel la première section latérale (19) et la seconde section latérale (20) s'étendent vers l'extérieur sur un côté supérieur (18) de la section de base (16), et dans lequel le premier élément arbre (31) et le second élément arbre (36) passent entre la première section latérale (19) et la seconde section latérale (20) au-delà de la traverse à mouvement de pendule (12, 12').

9. Châssis selon la revendication 7,
**caractérisé en ce que**
la traverse à mouvement de pendule (12, 12') comprend une première ouverture (46) à travers laquelle passe le premier élément arbre (31) et une seconde ouverture (47) à travers laquelle passe le second élément arbre (36).

10. Châssis selon l'une des revendications 1 à 9,
**caractérisé en ce que**
la traverse (11) est disposée à l'avant sur le cadre de châssis (3), la traverse à mouvement de pendule (12, 12') étant disposée à l'arrière du cadre de châssis (3).

11. Châssis selon l'une des revendications 1 à 10,
comprenant en outre
un appareil ressort et/ou d'amortissement (50) qui est disposé entre le cadre de châssis (3) et la traverse à mouvement de pendule (12, 12').

12. Véhicule commercial (1), en particulier un véhicule commercial militaire, comprenant un châssis (2) selon l'une des revendications 1 à 11.

13. Véhicule commercial selon la revendication 12,
comprenant en outre
une superstructure interchangeable (8), qui est placée sur la traverse (11) et sur la traverse à mouvement de pendule (12, 12').
